# EUROPEAN PATENT APPLICATION

(11) **EP 4 520 639 A1**
(43) Date of publication of application: **12.03.2025**
(21) Application number: 24198602.5
(22) Date of filing: 05.09.2024
(51) Int. Cl.: B62D 33/06

(54) **IMPROVED CABIN FOR A HEAVY VEHICLE**

(30) Priority: 07.09.2023 IT 202300018381
(71) Applicant: IVECO S.P.A., 10156 Torino (IT)
(72) Inventor: NAVARRO SANZ, Juan, 10156 TORINO (IT)
(74) Representative: Studio Torta S.p.A.

(57) **Abstract**

Cabin (2) for a heavy vehicle (1) provided with a chassis (3), the cabin (2) extending along a longitudinal axis (A) and a vertical axis (B) and delimiting a space (5) for housing a driver of the heavy vehicle (1), the cabin (2) comprising a top wall (2a) and a floor (2d) spaced along the vertical axis (B) a front wall (2c) and a rear wall (2b) spaced along the longitudinal axis (A) and a pair of lateral walls, the top wall (2a), the floor (2d), the rear wall (2b), the front wall (2c) and the lateral walls being connected to delimit the space (5), wherein the rear wall (2b) comprises a shoulder portion (2b') configured to delimit a space (11) with respect to the chassis (3), the space (11) being configured to house auxiliary elements (12) of the vehicle (1).

## Description

### CROSS-REFERENCE TO RELATED APPLICATIONS

This patent application claims priority from Italian patent application no. 102023000018381 filed on September 7, 2023, the entire disclosure of which is incorporated herein by reference.

### TECHNICAL FIELD

The present invention concerns a cabin for a heavy vehicle.

The present invention finds its preferred, although not exclusive, application in load transport vehicles such as trucks or alike. Reference will be made to this application by way of example below.

### BACKGROUND OF THE INVENTION

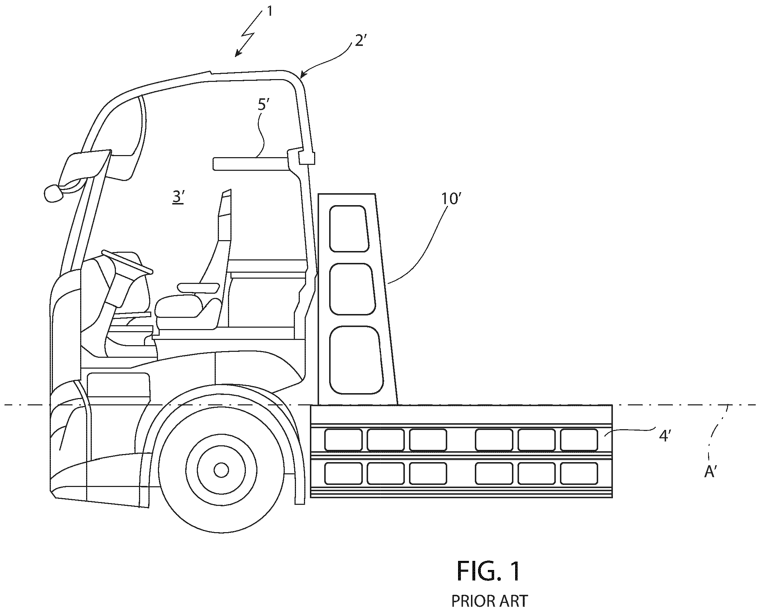

As known in prior art (figure 1) heavy vehicles 1' such as trucks comprise a cab 2' carried by a chassis 4' movable on ground, e.g. by wheels.

The cab 2' comprises a plurality of walls delimiting a space 3' configured to house a driver's seat assembly and usually a bed assembly 5 carried by one of the walls of the cab 2' above the driver's seat assembly.

Always as known, in order to reduce pollution emissions of heavy vehicles, it is known to electrify the generation of torque provided to the wheels by providing so-called e-axles, fuel cell tractions systems or natural gas engines.

The aforementioned environmental friendly tractions systems needs additional space on the vehicle 1' due to the presence of auxiliary elements 10' such as battery means or fuel storage tanks, that are usually carried on the chassis 4' in a rear position along longitudinal axis A' of the vehicle 1' with respect to the cab 2' .

It is self-evident that the presence of auxiliary elements 10' on the chassis 4' rear the cabin 2 reduces the useful space on the chassis 4' that needs to be elongated to allow the connection of the trailer thereon, i.e. to allow a correct position of the fifth-wheel mechanism, or by reducing the loadable area of the vehicle 1'.

Accordingly, a longer chassis 4' requires a three axles support with consequently increase of costs due to the longer manufacturing and additional elements needed.

Moreover, the presence of a longer chassis 4' with three axles increases the costs related to the mission of the vehicle 1' due to greater taxes due to the number of the axle.

Furthermore, the presence of further axles and of a longer chassis increases its weight with consequently reduction of autonomy and loss of efficiency.

Therefore, the need is felt to avoid the use of longer chassis to reduce related drawbacks as described above.

An aim of the present invention is to satisfy the above mentioned needs in a cost-effective and optimized manner.

### SUMMARY OF THE INVENTION

The aforementioned aim is reached by a vehicular cabin and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic lateral view of a vehicular cabin as known in the art;
- Figure 2 is a schematic lateral view of a vehicular cabin according to a first embodiment of the invention; and
- Figure 3 is a schematic lateral view of a vehicular cabin according to a second embodiment of the invention.

### DETAILED DESCRIPTION OF THE INVENTION

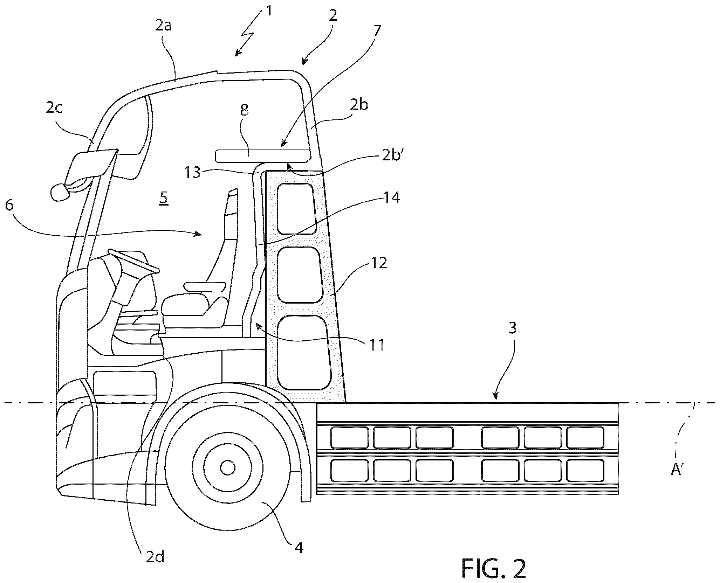

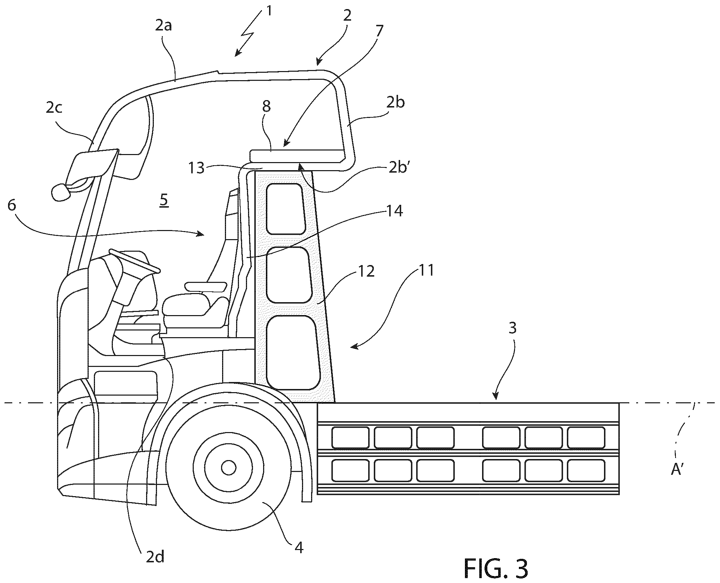

Figures 2 and 3 discloses two embodiments of a cabin 2 for a work vehicle 1 according to the invention.

The work vehicle 1 comprises a cabin 2 carried by a chassis 3 that is movable on ground, for instance as disclosed thanks to wheels 4 carried by a respective axle (not shown).

The cabin 2 delimit a space 5 with respect to the environment configured to house the driver. The cabin 2 essentially comprises a top wall 2a, a rear wall 2b, front wall 2c, and a floor 2d that are connected together with a pair of lateral walls (not shown) the space 5.

The front wall 2c and the rear wall 2b are spaced along a longitudinal axis A of the vehicle 1 while the floor 2d and the top wall 2a are spaced along a vertical axis B of the vehicle that is perpendicular to the longitudinal axis A.

The vehicle 1 further comprises a driver seat assembly 6 housed within space 5 configured to provide a seat for the driver to drive the vehicle 1.

The vehicle 1 further comprises a bed assembly 7 housed within space 5 and configured to provide a bed for allowing the driver to rest. The bed assembly 7 essentially comprises a bed 8 housed vertically above the seat assembly 5.

According to the invention, the rear wall 2b of the cabin 2 is shaped in order to delimit with chassis 3 a space 11 configured to house auxiliary elements 12 of the vehicle 1. In detail, space 11 is delimited along longitudinal axis by rear wall 2b on one side and opened to the environment on the other side and is delimited along vertical axis B by the rear wall 2b on a first side and by the chassis 3 on the other side.

In detail the rear wall 2b defines a shoulder portion 2b' configured to defines the aforementioned space 11 to house the auxiliary elements 12 of the vehicle 1.

With auxiliary elements 12 it is intended elements configured to store fluid or gaseous compounds, such as tanks, for being used by fuel cells or gas engines of the vehicle or battery assemblies to exchange energy with electric machines of the vehicle.

Shoulder 2b' comprises essentially a first wall 13 and second wall 14. The first wall 13 extends between a remaining portion of the rear wall 2b along longitudinal axis A and the second wall 14 extends from the first wall 13, opposite to the portion connected to the remaining portion of rear wall 2b and the floor 2d. Accordingly, shoulder 2b' has a substantially L-shaped cross-section in a plane delimited by longitudinal and vertical axis A, B.

In both embodiments, the first wall 13 is configured on the side faced to space 5, to support at least a portion of the bed assembly 7, i.e. to directly support a portion of bed 8.

In both embodiments the second wall 14 is faced rear to the seat assembly 6 and may be realized distanced (as shown) along longitudinal axis A direction or in contact with this latter.

In the first embodiment (figure 2), the bed 8 is carried in a cantilevered fashion by the first wall 13. In the second embodiment (figure 3) the bed 8 is substantially entirely supported vertically by the first wall 13 along the direction of the longitudinal axis A.

In such second embodiment, therefore, the space 11 has a further extension along longitudinal axis A that can be freely used to store greater auxiliary elements 12 or to other uses, such as to store further elements.

In view of the foregoing, the advantages of a cabin and a vehicle according to the invention are apparent.

Thanks to the presence of shoulder portion 2b' in the rear wall 2b of the cabin 2, it is possible to define a space 11 suitable for housing the auxiliary elements 12 thereby avoiding the need of a longer chassis 3.

In this way, the related drawbacks related to the use of longer chassis 3 are avoided.

Furthermore, the possible variation of the length of the first wall 13 allows to provide a space 11 that can have a variable extension along the longitudinal axis according to the need of the vehicle, i.e. to the need of bed system 7, of storing objects or of housing auxiliary elements 12.

In particular, in the first embodiment, the overall dimension in longitudinal axis A of the cabin 1 plus auxiliary elements 12, can remain sensibly the same as the length of cabin of the prior art, therefore new useful spaces are created without altering the overall dimensions of the vehicle 1.

Conversely, in the second embodiment, the length of the cabin along longitudinal axis A is increased, but in a limited way and permitted for new regulations related to low pollutants vehicle.

It is clear that modifications can be made to the described cabin and vehicle which do not extend beyond the scope of protection defined by the claims.

For example, the length of the first wall 13 of the shoulder portion 2b' may vary according to the specific need of the vehicle 1.

Moreover, the second wall 14 could extend along vertical axis B inclined with this latter.

Furthermore, instead of bed assembly 7, the vehicle may comprise storing elements configured to be carried, cantilevered or entirely, by the first wall 13.

## Claims

1. Cabin (2) for a heavy vehicle (1) provided with a chassis (3), said cabin (2) extending along a longitudinal axis (A) and a vertical axis (B) and delimiting a space (5) for housing a driver of said heavy vehicle (1), said cabin (2) comprising a top wall (2a) and a floor (2d) spaced along said vertical axis (B) a front wall (2c) and a rear wall (2b) spaced along said longitudinal axis (A) and a pair of lateral walls, said top wall (2a), said floor (2d), said rear wall (2b), said front wall (2c) and said lateral walls being connected to delimit said space (5),
**characterized in that** said rear wall (2b) comprises a shoulder portion (2b') configured to delimit a space (11) with respect to said chassis (3), said space (11) being configured to house auxiliary elements (12) of said vehicle (1), whereinsaid space (11) is delimited along said longitudinal axis (A) by said rear wall (2b) on one side and opened to environment on the other side and is delimited along said vertical axis (B) by said rear wall (2b) on a first side and by said chassis (3) on the other side.

2. Cabin according to claim 1, wherein said shoulder portion (2b') has a "L-shaped" cross-section along a plane defined by said longitudinal and vertical axes (A, B).

3. Cabin according to any of the preceding claims, wherein said shoulder portion (2b') comprises a first wall (13) parallel to said longitudinal axis (A) and a second wall (14) extending along said vertical axis (B), said cabin (2) further comprising a seat assembly (6), said second wall (14) being rear faced to said seat assembly (6).

4. Cabin according to claim 3, wherein said cabin (2) comprises a bed assembly (7), said bed assembly (7) being carried in a cantilevered way by said first wall (13) above said seat assembly (6).

5. Cabin according to claim 3, wherein said cabin (2) comprises a bed assembly (7), said bed assembly (7) being entirely supported along said longitudinal axis (A) by said first wall (13) above said seat assembly (6).

6. Cabin according to claim 3, wherein said cabin (2) defines a storing space/assembly between said first wall (11) and said roof (2a) within said space (5).

7. Heavy vehicle (1) comprising a cabin (2) according to any of the preceding claims and a chassis (3) movable on ground and carrying said cabin (2).

8. Heavy vehicle according to claim 7, wherein said auxiliary elements (12) comprises at least one among tanks and/or battery assemblies.
